# EUROPEAN PATENT SPECIFICATION

(11) **EP 1 192 090 B1**
(45) Date of publication and mention of the grant of the patent: **30.08.2006**
(21) Application number: 00949264.6
(22) Date of filing: 04.07.2000
(51) Int. Cl.: B65D 39/00, C08J 9/00, C08L 53/00, C08L 23/02

(54) **SYNTHETIC BOTTLE STOPPER**
FLASCHENSTOPFEN AUS SYNTHETISCHEM MATERIAL
BOUCHON DE BOUTEILLE SYNTHETIQUE

(30) Priority: 05.07.1999 EP 99305309
(43) Date of publication of application: 03.04.2002
(73) Proprietor: KRATON Polymers Research B.V., 1030 BH Amsterdam (NL)
(72) Inventor: COIGNOUL, Emanuelle, B-1348 Ottignies, Louvain-La-Neuve (BE); KADRI, Ilham, B-1348 Ottignies, Louvain-La-Neuve (BE)
(74) Representative: Kortekaas, Marcel C.J.A.
(86) International application number: PCT/EP2000/006354
(87) International publication number: WO 2001/002263

(56) References cited:
- WO-A-00/12592
- WO-A-00/26103
- GB-A- 1 196 125
- US-A- 3 686 364
- US-A- 4 764 535
- US-A- 5 496 862
- DATABASE WPI Section Ch, Week 199510 Derwent Publications Ltd., London, GB; Class A13, AN 1995-070424 XP002153392 & JP 06 345914 A (ASAHI KASEI KOGYO KK), 20 December 1994 (1994-12-20)

## Description

### Field of the Invention

The present invention relates to a synthetic bottle stopper. More in particular, the present invention relates to a bottle stopper made from a foamed thermoplastic elastomer comprising one or more thermoplastic block copolymers and a blowing agent.

### Background of the invention

Cork is a natural occurring material regularly used for the production of stoppers for casks, vials and bottles (also referred to as "bung" or "moulded closure for a liquid container", etc.). Cork has a good grip on glass, and requires an appropriate force of about 250-430 N to pull off the cork from a bottle. Stoppers made of cork can be used for closing a half-used bottle for a second time. Besides, swell of cork stoppers when in contact with wine improves their grip. Also, cork is a light material (density of about 0.22 kg/m³), which is important to control the cost when transporting the cork and/or the bottles wherein the cork stoppers are used. Cork is hence a popular material in the production of stoppers.

However, stoppers made of cork may become infected by fungi and bacteria, and they may impart undesired flavour and colour to the contents of the vials and bottles wherein they are used. Moreover, good quality cork is becoming rare and hence expensive. Accordingly, synthetic bottle stoppers have been developed.

Obviously, these synthetic bottle stoppers need to perform similar to cork as regards the elasticity of the material, long term creep, good control during insertion and manufacture, and possibility of reinsertion. Most importantly, they need to be light, i.e., have a density of less than about 0.7 kg/m³, preferably of about 0.5 kg/m³.

Synthetic stoppers for vials and bottles are known.

International application 99/01354 (Supreme Corq) discloses a synthetic cork for removable insertion into an opening of a bottle comprising a hard plastic top and a shaft made of a thermoplastic elastomer (TPE) combined with a blowing agent, wherein the TPE consists of one or more styrenic block copolymers. Suitable styrenic block copolymers are selected from the group corresponding to the general formulae A-B or A-B-A, wherein "A" represents a polystyrene block and "B" represents a polybutadiene block, a polyisoprene block, a hydrogenated polybutadiene block or a hydrogenated polyisoprene block. Suitable blowing agents comprise azodicarbonamide or a masterbatch thereof sold under the tradename "SPECTRATECH FM1150H", ozodecarbonoxide and sodium bicarbonate. The mixture used for forming the shaft may also incorporate a minor amount of low density polypropylene.

International application 94/25513 is an earlier application by Supreme Corq, disclosing a synthetic cork (referred to as "molded closure for a liquid container") comprising the TPE and blowing agent mentioned above.

US patent No. 3,984,022 (assigned to Le Bouchage Mécanique) discloses a bottle stopper of biconical configuration, which is made from a foamed plastic with a dense outer layer enclosing a closed cellular or honeycomb structure around the centre. The stopper is produced by injection of a plastic material, which may be a polyolefin such as polyethylene or EVA (ethylene-vinyl acetate), with a pore-forming additive into a mould.

US patent No. 4,499,141 (assigned to the Coca Cola Company) discloses a plastic closure for sealing liquid product containers wherein a synthetic cork article is prepared from a thermoplastic resin and a blowing agent, e.g., azodicarbonamide, and whereby the plastic article is injection moulded.

US patent No. 4,188,457 (assigned to Metal Box Limited.) discloses a "bung" for closing a wine bottle in the manner of a cork, which is formed in a conventional injection-moulding machine from ethylene-vinyl acetate copolymer (EVA) with the addition of sodium metabisulphite and sodium bicarbonate.

These synthetic bottle stoppers, however, are either too dense and/or too hard. As a result, these bottle stoppers will be difficult to insert (problem of leakage), and to remove (in one piece) with an ordinary corkscrew. Moreover, it may be difficult to insert a corkscrew if the stopper is too hard. Besides, these synthetic stoppers (or at least those of Supreme Corq) require the presence of a plasticiser in the form of an oil. If no or too little oil is used, then the thermoplastic elastomer composition will be too viscous and the cells therein will not be able to expand. The end-result is a dense "foam". If too much oil is used, then the viscosity will be too low and cells collapse, with the same end-result. Such bottle stoppers therefore require a precise operating window (about 30-40 parts per hundred parts of elastomer). Unfortunately, oil is a potential contaminant of the contents of the bottle. There is therefore a demand for a new foamed thermoplastic elastomer composition that provides synthetic bottle stoppers of suitable density, and that requires no or only a little oil as plasticiser.
The synthesis of foamed TPE compositions is known. In addition to the references cited herein before, such compositions are described in Japanese patent application No. 58173146 (Yokohama Rubber KK, Derwent abstract No. 83-822911/47). This reference describes a composition comprising a thermoplastic block copolymer and a thermoplastic resin and/or plasticizer or softener. The composition forms a non-adhesive foaming material and can be used as a packing or gasket material.

In US patent No. 4,764,535 (assigned to Q'SO Inc.) a composition is described comprising a mixture of two thermoplastic elastomers, a nucleating agent and an unstable resin. The compositions may be employed in formulating coatings, laminates, hot melt adhesives and caulking compounds.

Hot melt compositions from which foamed products can be obtained are disclosed in US patent No. 4,529,740 (assigned to W.R. Grace&Co.). The compositions include a thermoplastic elastomer, a small amount of a salt of a sulfonated styrene polymer, and a blowing agent. The composition may be used to produce foamed products suited for example as sealants in closures for containers.

Plastic foam products are also disclosed in US patent No. 5,585,411 and International application No. 94/28066 (both to Shell). In the former, a plastic foam is disclosed that is made from a blend comprising poly-1-butene, a styrenic block or star copolymer, and/or an olefinic rubber, and optionally a non-elastomeric polyolefin. These foams are particularly useful in very high temperature applications such as pipe wrap in refrigerators. In the latter a novel elastomeric poly-1-butene is described, as well as blends thereof with compatible materials, which are particularly suitable in textile and fibre applications, and blends thereof with incompatible materials, which are particularly useful in easy-open packaging applications, in foam applications and in PVC replacement.

From GB-1,196,125 sealing gaskets or liners for container closures were known, which comprised a thermoplastic material that was of a block copolymer of styrene and butadiene or a block copolymer of vinylpyridine and butadiene, and an olefin polymer. Said block copolymer preferably contained 20 to 40 wt% styrene and had poly(styrene) segments at each end of the polymer chain. Said olefin polymer component was selected from poly(ethylene), poly(styrene) and an ethylene/vinyl acetate copolymer and was preferably not branched, low density poly(ethylene) or cross linked poly(ethylene). Preferred weight ratios in said composition were up to 25 wt% of olefin polymer and at least 75 wt% of block copolymer.

The use of a composition as described in claim 1 for the purpose of preparing a superior synthetic bottle stopper is neither disclosed nor hinted at in any of these references.

### Summary of the invention

The present invention provides a synthetic bottle stopper made from a foamed thermoplastic elastomer composition comprising
a) a triblock copolymer or a mixture of diblock copolymer and triblock copolymer comprising one or more glassy polymer blocks made of polymerized vinylaromatic monomer and one elastomeric block made of hydrogenated polymerized conjugated diene,
b) one or more branched polyolefins having a melt flow index of from 0,2 to 20 (at 2.16 kg/190°C, determined in accordance with ASTM D 1238), in an amount of from 10 to 100 parts by weight per 100 parts by weight of component a), and
c)a blowing agent.

Moreover, the present invention provides a process for preparing a synthetic bottle stopper from a foamed thermoplastic elastomer composition free of plasticizer, and comprising
a) a triblock copolymer or a mixture of diblock copolymer and triblock copolymer comprising one or more glassy polymer blocks made of polymerized vinylaromatic monomer and one elastomeric block made of hydrogenated polymerized conjugated diene,
b) one or more branched polyolefins having a melt flow index of from 0,2 to 20 (at 2.16 kg/190°C, determined in accordance with ASTM D 1238), in an amount of from 10 to 100 parts by weight per 100 parts by weight of component a), and
c) a blowing agent,
wherein components a) to c) are fed either partly or fully as a pre-blend or separately in a discontinuous or continuous mixer.

### Detailed description of the invention

The components of the composition are described in more detail herein after.

### Component a)

The expression "thermoplastic block copolymer" refers to a polymer having two or more distinguishable polymer blocks, of which at least one is glassy or crystalline at service temperature but fluid at higher temperatures, and at least one of which is elastomeric (rubbery) at service temperature. A comprehensive review on such polymers is provided by Messrs. Legge, Holden and Schroeder, in

"Thermoplastic Elastomers", published by Hanser Publishers in 1987 (ISBN 3-446-14827-2). Such polymers include thermoplastic polyurethane elastomers and various other block copolymers.

The preferred thermoplastic block copolymers in accordance with the present invention, are styrenic block copolymers, i.e., wherein the or each glassy polymer block of the block copolymer is made of polymerized vinylaromatic monomer, such as styrene, in an amount of at least 80 mole % on the total monomer content of the glassy polymer block. Styrene is the preferred vinylaromatic monomer, but other suitable vinylaromatic monomers include α-methylstyrene, p-methylstyrene, m-methylstyrene, o-methylstyrene, p-tert-butylstyrene, dimethylstyrene, and various other alkyl-substituted styrenes, alkoxy-substituted styrenes, vinylnaphthalene and vinyl xylene. The alkyl and alkoxy groups of the alkyl-substituted or alkoxy substituted styrenes respectively preferably contain from 1 to 6 carbon atoms, more preferably from 1 to 4 carbon atoms. Comonomers, if present, may be selected from (di)olefins and other compounds copolymerizable with styrene.

Preferred styrenic block copolymers are those wherein the or each elastomeric polymer block of the block copolymer is made of polymerized conjugated diene, such as butadiene or isoprene, in an amount of at least 80 mole% on the total monomer content of the elastomeric polymer block. Butadiene and isoprene are the preferred dienes, but other suitable conjugated dienes include dienes with from 4 to 8 carbon atoms per monomer, for example, 2-ethyl-1,3-butadiene, 2,3-dimethyl-1,3-butadiene, 1,3-butadiene, 1,3-pentadiene, 2,4-hexadiene, 3-ethyl-1,3-pentadiene, and mixtures thereof. Comonomers, if present, may be selected from vinylaromatic monomers and other compounds copolymerizable with the diene.

The vinyl content of the elastomeric polymer block (i.e. that part of the conjugated diene that is polymerized in a "1,2-fashion") is preferably at least 55% (mol/mol on total conjugated diene), more preferably in the range of 65-80%. These styrenic block copolymers have greater ease of processing, require even less plasticizer, and add increased melt strength and drawability to the thermoplastic elastomer composition.

Still more preferred, are styrenic block copolymers that have at least one elastomeric polymer block made of polymerized conjugated diene that is hydrogenated. In other words, the hydrogenated version of the block copolymers mentioned above. Suitably, such block copolymers are selectively hydrogenated (i.e., only the elastomeric polymer blocks), to a degree of 80% or more based on the (original) residual unsaturation.

Excellent synthetic bottle stoppers have been made from styrenic block copolymers having an overall content of vinylaromatic monomer in the range of 10 to 50% by weight, preferably 20 to 45% by weight. Most preferred are such styrenic block copolymers having a total apparent molecular weight in the range from 30,000 to 400,000 g/mol, more preferably from 50,000 to 300,000 as measured with gel permeation chromatography (GPC) using polystyrene calibration standards (according to ASTM D 3536).

Block copolymers come in the form of linear diblocks, triblocks and multiblocks (produced with sequential polymerization techniques or difunctional coupling agents), or branched block copolymers (using multifunctional coupling agents and/or re-initiation techniques). The preferred block copolymers in accordance with the present invention are linear triblock copolymers, or blends of triblock copolymers, containing up to 30% weight/weight of diblock copolymers.

Suitable block copolymers include, amongst others, those sold by Shell under the trademark "KRATON", and those sold under the trademarks "DYNAFLEX" (CC&P), "VECTOR" (DECXO), "EUROPRENE" (ENICHEM) ; "QUINTAC" (NIPPON ZEON); "FINAPRENE" (FINA); "STEREON" (FIRESTONE); "TUFRENE" (ASAHI) and "SEPTON" (KURARAY). Particularly suitable are "KRATON" elastomeric block copolymers sold as grade D1102, KX225, G1650, G1652, G1657, G1701, G1726, G1730, G1750 and G1780.

### Component b)

A branched polyolefin is a polymer having alkyl groups containing 2 or more carbon atoms attached to the backbone. Such polyolefins are known as high melt strength polymers and hence impart high melt strength and drawability to blends thereof with (styrenic) block copolymers. Such branched polyolefins include e.g., high melt strength propylene polymers, containing long-chain branches inside the polypropylene, disclosed by Dr. Ulf Panzer at the SPO '98; and poly-1-butylene as disclosed in e.g., US Patent No. 4,960,820. Suitable polyolefins have a melt flow index ('MFI') of from 0.05 to 400, preferably from 0.1 to 200, even more preferably from 0.2 to 20 and most preferably from 0.4 to 5 dg/min at 2.16 kg/190 °C. They may be produced by the polymerisation of an alpha-or internal alkene having 3 or more carbon atoms using the Daploy process disclosed by Dr. Pzanzer, or by (Ziegler-Natta low pressure) polymerization of an alpha-or internal alkene having 4 to 10 carbon atoms, preferably a linear alkene such as 1-butene, 1-pentene, 2-pentene, 1-hexene, 1-heptene, 1-octene, or the copolymerization of these alkenes with e.g., up to 10 mole% ethene and/or propene (e.g., as described in DE-A-1,570,353). Preferably the branched polyolefin contains from 80%, more preferably from 95% and most preferably from 97% by weight of isotactic portions. Branched polyolefins that have been found to be very suitable are polymers of 1-butene, having a 1-butene content of at least 50 mole%, preferably at least 70 mole%. The most preferred branched polyolefin is poly-1-butene.

The weight average molecular weight of the polyolefin may range from 60,000 to 1,000,000 g/mol, determined by GPC, using poly-1-butene standards. Suitable polyolefins have a density of from 0.875 to 0.925, preferably from 0.900 to 0.920 and most preferably from 0.910 to 0.915.

Poly-1-butene PB-0110, marketed by Shell is a particularly suitable polymer. This polymer is a homopolymer with a melt index of 0.4 g/10min. at 190 °C and 2.16 kg and a weight average molecular weight of 800,000.

Component b) is preferably used in an amount of 10 to 100 parts per 100 parts of component a) ('phr'), more preferably in an amount of 30 to 80 phr.

### Component c)

As noted above the foamed thermoplastic elastomer composition of the present invention also contains a blowing agent. Normally a blowing agent decomposes above a certain temperature thereby releasing gas, such as nitrogen, which causes a volume increase of the reaction mass. The temperature at which the blowing agent starts decomposing is further referred to as the activation temperature. In principle, any known blowing agent such as the ones mentioned above, and more particular as described in US patent No. 5,585,411 may be used. Generally known blowing agents are for instance sodium bicarbonate, azodicarbonamide-based compound and diphenyloxide-4,4'-disulphohydrazide. The latter is commercially available under the tradename "GENITRON" OB, while an azodicarbonamide-based masterbatch is commercially available under the tradenames "GENITRON" PB10 or "CELOGEN" 754A.

Alternative blowing agents are heat expandable thermoplastic particles encapsulating heat expandable gas or liquified gas. Such heat expandable thermoplastic particles are known in the art and available commercially under the tradename "EXPANCEL". Further details regarding such heat-expandable thermoplastic particles can e.g. be obtained from European patent application No. 717,091.

Preferably, the blowing agent is azodicarbonamide or sodium bicarbonate or mixtures thereof. Especially good results may be obtained with sodium bicarbonate.

The blowing agent is preferably present in an amount from 1 to 10 %wt., basis the total composition, more preferably 1 to 5% by weight.

### Other components

Optionally, the foamed thermoplastic elastomer composition comprises further components. Such other components include the "olefinic rubbers" mentioned in US patent No. 5,585,411; the compatible and incompatible materials mentioned in WO 94/28066, etc.

For instance, the composition may further comprise from 5 to 50 phr of a polyolefin other than the branched polyolefin, e.g., selected from polyethylene, polypropylene and copolymers thereof. Preferably, the polyolefin is polypropylene or polyethylene, in particular LLDPE. More preferably, the polyolefin is polypropylene.

The foamed thermoplastic elastomer composition may also comprise polymers that are compatible with the glassy polymer blocks of the thermoplastic block copolymers, such as polyphenylene ether and/or polystyrene. For instance, the composition may comprise from 5 to 50 phr of such polymers.

It will be appreciated that the compounds of the present invention may further contain additional compounds like stabilisers, fillers, slipping agents (compounds that are known to provide grip to the glass, such as stearates, eureamide and/or kenamide), waxes and colouring agents (pigments) and even bits of natural cork to give the stopper a cork-like appearance.

The compositions of the invention can be prepared according to procedures well known to those skilled in the art. For instance they may be made by extrusion and melt blending. Examples of apparatus which may be used to prepare the compositions of the present invention include single or multiple screw extruders, mixing rollers, internal mixers, Banbury mills, and kneaders. For example, the compositions of the present invention may be prepared by feeding ingredients either partly or fully as a pre-blend or separately in a discontinuous or continuous mixer. The mixer is preferably a continuous mixer. If in first instance compositions are produced that do not contain a blowing agent then we prefer a twin-screw extruder is used, in particular a co-rotating twin-screw extruder.

The composition ingredients are preferably pre-blended in a so-called turbo-mixer, such as a "Papenmeier" mixer.

The block copolymer is blended with the branched polyolefin (e.g., poly-1-butene), and any other ingredients such as filler, polyolefin, polyphenylene ether, syndiotactic polystyrene, stabilisers, waxes and/or pigments. Subsequently, blowing agent may be added, either in the same or a separate blending step. Alternatively, and most preferably, no blowing agent is added at this stage and first a composition without blowing agent is produced.

If a composition without blowing agent is produced, then the composition may subsequently be pre-blended or tumble-mixed with a blowing agent to prepare a masterbatch as will be discussed in more detail herein after.

If a composition with blowing agent is produced, care should be taken that during the compounding process the temperature is kept below the blowing agent decomposition temperature unless (full or partial) foaming is desired during this first step.

The preparation of a foamed thermoplastic elastomer composition as described above comprises a second aspect of the present invention. In order to produce the "cork", the composition is injected into a mould, e.g. as described in US patents Nos. 3,984,022 and/or 4,499,141. Alternatively, the present composition allows corks to be made via extrusion, which is much preferred over injection moulding since producing uniform corks in a continuous fashion at a higher rate.
The invention is illustrated by the following examples.

### Examples

The following ingredients were used in the Examples:

| | |
|---|---|
| PF814 | a high melt strength polypropylene (MPI = 3, 230 °C/2.16 kg) commercially available from Montell polyolefins. |
| PB0110 | a high melt strength poly-1-butene (MFI = 0.4, 190 °C/2.16 kg; MP is about 125 °C) commercially available from Montell polyolefins. |
| "KRATON" G1652 ('KG1652') | a linear styrene-ethylene/butylene-styrene block copolymer having a polystyrene content of 29% by weight, available from Shell Chemicals companies. |
| "KRATON" G1701 ('KG1701') | a linear styrene-ethylene/propylene block copolymer having a polystyrene content of 28% by weight, available from Shell Chemicals companies. |
| "IRGANOX" 1010 | tetrakis-ethylene-(3,5-di-tertiary-butyl-4-hydroxy-hydrocinnamate)methane. |
| "IRGANOX" PS800 | dilauryl thiopropionate. |
| "GENITRON" PB10 | a masterbatch of 10% weight azodicarbonamide in a LDPE carrier, available from Bayer. |
| "CELOGEN" 754-A | activated azodicarbonamide in powder form, available from Uniroyal Chemicals. |

### TPE Compositions

Compositions not containing blowing agent were prepared as follows. 100 parts by weight of a KG1652 were charged into a Papenmeier mixer at room temperature.

To the thus obtained mass were added the desired amount (0 or 25 phr) of KG1701, a desired amount (27 or 54 phr) of poly-1-butene and a desired amount (0 to 54 phr) of polypropylene and stabilisers. Blending was continued for 5 minutes.

The pre-blend thus obtained was fed into a co-rotating twin-screw extruder (Werner-Pfeifferer) to produce various compositions. The temperature in the twin-screw extruder ranged from 140 to 200 °C. The twin-screw extruder is equipped with a strand die. The strands obtained are cooled down in a water bath and cut into pellets with a pelletiser. Table 1 depicts the breakdown of compositions A-C, all in parts by weight.

**Table 1**

| Compound | A | B | C |
|---|---|---|---|
| KG1652 | 100 | 100 | 100 |
| KG1701 | | 25 | 25 |
| PB0110 | 54 | 54 | 54 |
| PF814 | | 54 | 27 |
| "IRGANOX" 1010 | 0.2 | 0.2 | 0.2 |
| "IRGANOX" PS800 | 0.2 | 0.2 | 0.2 |

Pellets of compositions A and B obtained above were dry-blended with 3% by weight of azodicarbonamide as blowing agent to prepare masterbatches A and B. The blowing agent used in example 1 was "GENITRON" PB10.

The masterbatches A and B thus obtained were fed into a single screw lab extruder (Extrudex), using a temperature profile of 190 °C at the feed entrance, 200 °C at the end of the extruder and 210 °C at the die, to prepare foamed compositions A and B. The die was a strand die of 6 mm. The density of the foamed strands obtained and the compounds prior foaming were measured. Results are shown in Table 2.

**Table 2**

| Compound | Density |
|---|---|
| A prior foaming | 0.90 |
| A + 3% blowing agent | 0.66 |
| B prior foaming | 0.91 |
| B + 3% blowing agent | 0.54 |

Both compositions A and B show a good density decrease with 3% of blowing agent. The best density decrease is obtained with composition B containing a mixture of triblock and diblock copolymers.

### Example 2

Pellets of compositions A and B obtained in example 1 were dry-blend with 2.5 or 3% by weight of "GENITRON" PB10 as a blowing agent to prepare masterbatches.

The masterbatches thus obtained were fed into an injection moulding machine (Battenfeld), using a temperature profile of 190 °C at the feed entrance 200 °C at the end of the extruder and 210 °C at the die, to prepare foamed specimen A and B. The foamed specimen obtained by the injection were circular plates with a diameter of 45 mm and a thickness of 6 mm. The density of the foamed specimen were measured and the results are shown in Table 3.

**Table 3**

| Composition | Density |
|---|---|
| A + 2.5% blowing agent | 0.53 |
| B + 2.5% blowing agent | 0.52 |
| B + 3% blowing agent | 0.52 |

Both compounds show good density decrease with 2.5% by weight of blowing agent and an increase of blowing agent did not result in a decrease of the density.

### Example 3

Pellets of compositions A and C were dry-blended with 5% by weight of azodicarbonamide as blowing agent to prepare masterbatches A and C. The masterbatch A and C has been prepared with the blowing agent "GENITRON" PB10.

The masterbatches A and C thus obtained were fed into an injection moulding machine (Negri Bossi & C), using a temperature profile of 170 °C at the feeding entrance, 190 °C at the end of the extruder and 190 °C at the die to prepare foamed specimens A and C. The foamed specimens obtained were stoppers of 38 mm by length and a diameter of 22 mm. The density of the stoppers were measured and the results are shown in Table 4.

**Table 4**

| Composition | Density |
|---|---|
| A + 5% blowing agent | 0.63 |
| C + 5% blowing agent | 0.56 |

The best density decreases were obtained with composition C, containing linear styrene-ethylene/propylene block copolymer.

The foaming conditions have not been optimised in examples 2 and 3. For instance, optimisation of foaming conditions such as optimum temperature profile and die pressure is expected to lead to further density reduction to e.g. 0.5.

It is known that poly-1-butene crystallises only slowly. If desired, nucleating agents may be used to increase the crystallisation rate. Nucleating agents are well know to those skilled in the art and available commercially. The most popular nucleating agent is Talc, but the use of stearamide is also well known.

### Example 4

Foamed stoppers C thus obtained in example 3 have been inserted in glass bottles filled with water, using a manual cork insertion machine. An ordinary corkscrew was then fixed into the stoppers. The bottles have been then fixed in a tensile machine (Zwick) while the corkscrew was fixed at the moving crosshead. The stoppers were pull-out of the bottle at a constant speed of 100 mm/min. The force needed to extract the stoppers was measured and the wall-stress was calculated with the stopper length and the bottle circumference. The stoppers C have been measured in comparison with natural cork of 3 and 5 years old and in comparison with competitor synthetic stoppers X and Y, having both a density of 0.60. The results are shown in Table 5.

**Table 5**

| Stoppers | Force N | Wall Stress, kPa |
|---|---|---|
| Natural cork 3 years | 247 | 156 |
| Natural cork 5 years | 395 | 153 |
| Competitor X | 230 | 110 |
| Competitor Y | 180 | 70 |
| Stopper C | 410 | 184 |

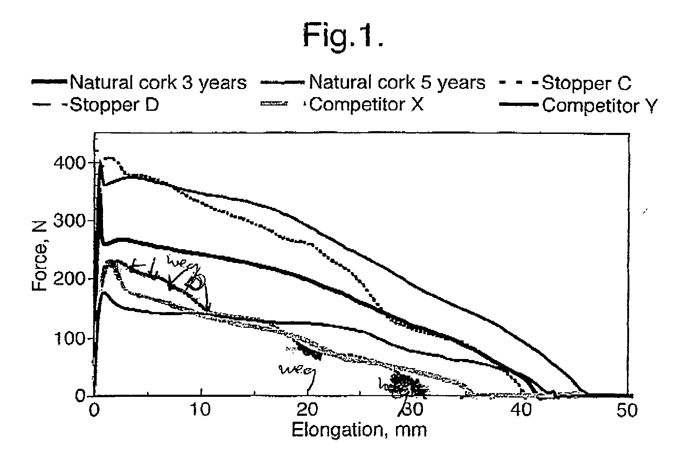

The curves obtained during the tensile test are shown in figure 1. The results and the graph show that stopper C is closer to the natural cork of 3 or 5 years.

## Claims

1. A synthetic bottle stopper made from a foamed thermoplastic elastomer composition free of plasticizers, **characterized in that** said composition comprises
a) a triblock copolymer or a mixture of diblock copolymer and triblock copolymer comprising one or more glassy polymer blocks made of polymerized vinylaromatic monomer and one elastomeric block made of hydrogenated polymerized conjugated diene,
b) one or more branched polyolefins having a melt flow index of from 0,2 to 20 (at 2.16 kg/190°C, determined in accordance with ASTM D 1238), in an amount of from 10 to 100 parts by weight per 100 parts by weight of component a), and
c) a blowing agent.

2. A synthetic bottle stopper as claimed in claim 1 wherein the vinylaromatic monomer is styrene and wherein the diene is butadiene and/or isoprene.

3. A synthetic bottle stopper as claimed in claims 1 to 2 wherein each block styrenic block copolymer has an overall content of vinylaromatic monomer in the range of 10 to 50 % by weight, and a total apparent molecular weight in the range of from 30,000 to 400,000 g/mol.

4. A synthetic bottle stopper as claimed in claims 1 to 3 wherein component b) comprises a polymer of 1-butene and/or a high melt strength polymer of propene.

5. A synthetic bottle stopper as claimed in claims 1 to 4, comprising a blowing agent in an amount from 1 to 10 %wt on basis of the total composition.

6. A process for preparing a synthetic bottle stopper from a foamed thermoplastic elastomer composition free of plasticizer, and comprising
a) a triblock copolymer or a mixture of diblock copolymer and triblock copolymer comprising one or more glassy polymer blocks made of polymerized vinylaromatic monomer and one elastomeric block made of hydrogenated polymerized conjugated diene,
b) one or more branched polyolefins having a melt flow index of from 0,2 to 20 (at 2.16 kg/190°C, determined in accordance with ASTM D 1238), in an amount of from 10 to 100 parts by weight per 100 parts by weight of component a), and
c) a blowing agent,
wherein components a) to c) are fed either partly or fully as a pre-blend or separately in a discontinuous or continuous mixer.

## Patentansprüche

1. Flaschenstopfen aus synthetischem Material hergestellt aus einer aufgeschäumten thermoplastischen weichmacherfreien Elastomerzusammensetzung, **dadurch gekennzeichnet, dass** die Zusammensetzung umfasst
a) ein Triblockcopolymer oder eine Mischung aus einem Diblockcopolymer und einem Triblockcopolymer, umfassend einen oder mehrere glasartige Polymerblöcke, die aus polymerisiertem vinylaromatischen Monomer hergestellt sind, und einen elastomeren Block hergestellt aus hydriertem polymerisierten konjugierten Dien,
b) ein oder mehrere verzweigte Polyolefine, die einen Schmelzflussindex von 0,2 bis 20 (bei 2,16 kg/190°C bestimmt gemäß ASTM D 1238) aufweisen, in einer Menge von 10 bis 100 Gewichtsteile auf 100 Gewichtsteile des Bestandsteils a), und
c) ein Treibmittel.

2. Flaschenstopfen aus synthetischem Material nach Anspruch 1, worin das vinylaromatische Monomer Styrol ist und worin das Dien Butadien und/oder Isopren ist.

3. Flaschenstopfen aus synthetischem Material nach einem der Ansprüche 1 bis 2, worin jeder Block des Styrolblockcopolymers einen Gesamtgehalt an vinylaromatischem Monomer im Bereich von 10 bis 50 Gew.-% und ein gesamtes scheinbares Molekulargewicht im Bereich von 30.000 bis 400.000 g/mol aufweist.

4. Flaschenstopfen aus synthetischem Material nach einem der Ansprüche 1 bis 3, worin Bestandteil b) ein Polymer von 1-Buten und/oder ein Propenpolymer mit einer hohen Schmelzfestigkeit umfasst.

5. Flaschenstopfen aus synthetischem Material nach einem der Ansprüche 1 bis 4, umfassend ein Treibmittel in einer Menge von 1 bis 10 Gew.-% auf der Basis der Gesamtzusammensetzung.

6. Verfahren zur Herstellung eines Flaschenstopfens aus einer aufgeschäumten, weichmacherfreien, thermoplastischen Elastomerzusammensetzung, , und umfassend
a) ein Triblockcopolymer oder eine Mischung aus einem Diblockcopolymer und einem Triblockcopolymer, umfassend einen oder mehrere glasartige Polymerblöcke, die aus polymerisiertem vinylaromatischen Monomer hergestellt sind, und einen elastomeren Block hergestellt aus hydriertem polymerisierten konjugierten Dien,
b) ein oder mehrere verzweigte Polyolefine, die einen Schmelzflussindex von 0,2 bis 20 (bei 2,16 kg/190°C bestimmt gemäß ASTM D 1238) aufweisen, in einer Menge von 10 bis 100 Gewichtsteile auf 100 Gewichtsteile des Bestandsteils a), und
c) ein Treibmittel,
und worin die Bestandteile a) bis c) entweder teilweise oder vollständig als eine Vormischung oder getrennt in einen diskontinuierlich oder kontinuierlich arbeitenden Mischer zugeführt werden.

## Revendications

1. Bouchon de bouteille en matériau synthétique fabriqué à partir d'une composition élastomère thermoplastique expansée exempte de plastifiants, **caractérisé en ce que** ladite composition comprend :
a) un copolymère triséquencé ou un mélange d'un copolymère diséquencé et d'un copolymère triséquencé comprenant une ou plusieurs séquences polymères vitreuses constituées d'un monomère vinylaromatique polymérisé et une séquence élastomère constituée d'un diène conjugué hydrogéné polymérisé,
b) une ou plusieurs polyoléfines ramifiées ayant un indice de fusion de 0,2 à 20 (à 2,16 kg/190°C, déterminé selon la norme ASTM D 1238), en quantité de 10 à 100 parties en poids pour 100 parties en poids du composant a), et
c) un agent gonflant.

2. Bouchon de bouteille en matériau synthétique selon la revendication 1, dans lequel le monomère vinylaromatique est le styrène et dans lequel le diène est le butadiène et/ou l'isoprène.

3. Bouchon de bouteille en matériau synthétique selon les revendications 1 et 2, dans lequel chaque séquence de copolymère de séquence styrénique a une teneur totale en monomère vinylaromatique dans la plage de 10 à 50% en poids, et un poids moléculaire total apparent dans la plage de 30.000 à 400.000 g/mole.

4. Bouchon de bouteille en matériau synthétique selon les revendications 1 à 3, dans lequel le composant b) comprend un polymère de 1-butène et/ou un polymère de propène de résistance à la fusion élevée.

5. Bouchon de bouteille en matériau synthétique selon les revendications 1 à 4, comprenant un agent gonflant en quantité de 1 à 10% en poids par rapport à la composition totale.

6. Procédé pour préparer un bouchon de bouteille en matériau synthétique à partir d'une composition élastomère thermoplastique expansée exempte de plastifiant et comprenant:
a) un copolymère triséquencé ou un mélange d'un copolymère diséquencé et d'un copolymère triséquencé comprenant une ou plusieurs séquences polymères vitreuses constituées d'un monomère vinylaromatique polymérisé et d'une séquence élastomère constituée d'un diène conjugué hydrogéné polymérisé,
b) une ou plusieurs polyoléfines ramifiées ayant un indice de fusion de 0,2 à 20 (à 2,16 kg/190°C, déterminé selon la norme ASTM D 1238), en quantité de 10 à 100 parties en poids pour 100 parties en poids du composant a), et
c) un agent gonflant,
dans lequel les composants a) à c) sont délivrés partiellement ou complètement sous la forme d'un prémélange, ou séparément, à un mélangeur en mode discontinu ou continu.
